# EUROPEAN PATENT SPECIFICATION

(11) **EP 1 389 916 B1**
(45) Date of publication and mention of the grant of the patent: **06.02.2008**
(21) Application number: 02724335.1
(22) Date of filing: 10.05.2002
(51) Int. Cl.: A23C 19/05, A23C 9/137

(54) **METHOD FOR PREPARING LOW-FAT CHEESES**
VERFAHREN ZUR HERSTELLUNG VON FETTARMEM KÄSE
PROCEDE DE PREPARATION DE FROMAGES ALLEGES EN GRAISSE

(30) Priority: 11.05.2001 FI 20010996
(43) Date of publication of application: 25.02.2004
(73) Proprietor: CEREFI OY, 02160 Espoo (FI)
(72) Inventor: MÄLKKI, Yrjö, FIN-02160 ESPOO (FI); LUNDSTRÖM, Juha, FI-31520 Pitkäjärvi (FI)
(74) Representative: Saijonmaa, Olli-Pekka
(86) International application number: PCT/FI2002/000402
(87) International publication number: WO 2002/091844

(56) References cited:
- EP-A1- 0 427 310
- EP-A1- 1 088 832
- WO-A1-96/25051
- WO-A2-00/22939
- US-A- 5 512 311
- US-A- 5 709 900
- WHISTLER R.L. ET AL: 'Starch: Chemistry and Technology', 1984, ACADEMIC PRESS INC., ORLANDO, SAN DIEGO, NEW YORK, LONDON, TORONTO, MONTREAL, SYDNEY, TOKYO * page 287 - page 291 *

## Description

The subject of this invention is a method for preparing cheese, whereby milk is curdled, the curdle is cut into grains, whey separated from the grains is removed, and the grains are compressed to cheese. The invention concerns especially preparation of low-fat cheeses, attempting to achieve an improved control of textural and taste properties, as compared to that which has been possible until now.

In the preparation of low-fat foods, fat has been generally replaced by adding hydrocolloids such as maltodextrins, vegetable gums, or some water-insoluble food grade ingredients which are available in sufficiently fine particles. When using water-insoluble ingredients, the objective has been to replace fat with particles from 10 to 20 micrometres, which are said to give a similar mouthfeel than fat. The most well-known of such applications is the use of whey proteins for low-fat margarines and spreads.

In the preparation of low-fat cheeses, starches have been used in a similar way as the afore mentioned hydrocolloids for forming gels, whereby starches have been usually in a pregelatinized state for instance EP 0 427 310 or 5,709,900. The ingredients have often been starch sources of high amylose content. Other starch sources have been used for this purpose by pretreating them by hydrolyzing 1→6 bonds of amylopectin, as it has been presented, for example, in the AU patent 691 352, and in the US patent 5 711 986. In some cases starch has been chemically modified in such a way that granules do not disintegrate when the temperature is elevated. Use of small-sized mineral particles such as titanium dioxide, coated with hydrocolloids, has also been presented, for example in the US patent 5 614 243.

In the cheese manufacture, use of the above mentioned other ingredients to replace fat has so far been presented only when preparing soft cheeses such as cottage cheese, process cheese and cream cheeses, and for creating a fat resembling mouthfeel. The addition has usually been suggested to be performed at some stage after the curdling, where the gelation does no longer disturb the curdling and separation of whey. An exception is the use of small-sized whey protein particles, which are suggested to be added before the curdling, and the use of which has been presented to be possible also in the preparation of hard and semi-hard cheeses, as it has been presented in EP patent 963 700. By using these types of substances it is possible to simulate fat only as regards solid fat globules and the tactile sensation in the mouth. These substances are by their nature not able to give an oily sensation in the mouth, nor carry any fat or oil soluble aroma compounds.

A special problem in the preparation and ripening of low-fat cheeses has been the occurrence of rubbery texture, also called gumminess, which is most frequently observed in hard and semi-hard cheeses, especially following ripening of short duration. The problem has been known at least from 1940's. No experimental proof of the reason for its occurrence has been presented. The remedies presented and used have been an addition of certain water-binding hydrocolloids, which will easily lead to a soft texture and to changes in the type of aroma and flavour, further, the use of whey protein particles mentioned above, and a prolonging of curing time, which does not always succeed or is not possible for economical or capacity reasons. The frequency of this fault is a handicap in marketing, which limits the demand of hard and semi-hard low-fat cheeses.

In the ripening of cheeses, the most important reactions occurring are the breakdown of proteins and peptides. They affect both textural and flavour properties. Speeding up these reactions by added proteolytic and peptolytic enzymes has until now been possible only by introducing bacterial or mold cultures on the surface of cheeses after pressing. Proteolytic enzymes cannot be added to cheese vat milk before curdling, since in freely dissolved state they would disturb the curdling.

According to this invention it has now been surprisingly found, that by using granular starch as an ingredient, its addition is possible to perform already before curdling. In the method of the invention, it is thus essential that starch is incorporated in the cheese by addition of finely granuled starch to the milk before curdling, so as to obtain a content of starch granules distributed in the curdle and in the cheese grains obtained from the curdle, as well as in the final compressed cheese product.

The invention is defined by the appended claims.

In microscopic examinations of the curdle obtained according to the invention it has been verified, that starch granules are evenly distributed within the continuous protein network. It is thus to be expected, that the starch granules affect by weakening the mechanical properties of the protein network and that they have effects on the properties such as firmness, elasticity and chewiness of the cheese obtained. It also was found, that when the starch granules are not allowed to preswell, they do not impair the curdling of milk, nor the separation of whey at the stage when the curdle is cut into cheese grains whereas a preswelling caused a retardation of the curdling and a softening of the curdle, evidently due to separation of soluble starch which has interfered the curdling. On the other hand, preswelling of the starch improved the water-holding resulting to an increased moisture content of the cheeses and a softer texture.

Addition of starch granules before curdling is applicable especially in the preparation of low-fat cheeses. In this invention, the expression low-fat cheeses means foremost cheeses where the fat content is adjusted by removal of fat from milk before curdling to the range from 10 to 25% from dry matter. Starch granules replace fat in the cheese structure by being distributed within the protein network in an analogous matter as compared to fat globules.

According to the invention the weakening effect of evenly distributed starch granules on the mechanical properties of cheese is especially remarkable in hard and semi-hard cheeses, where occurrence of a rubbery texture can be avoided by addition of starch. The experimental evidence obtained in connection of this invention shows, that this is at least in part based on the dilution of the coherence of the protein network by included starch granules, and by creation of minute cracks in it when these granules are swelling after pressing of the cheese. The magnitude of this effect can be controlled by preswelling the granules before they are added in the milk, or by complexing amylose on the surface of the granules or transferred to solution by one or several polar lipids such as glyceryl monostearate or with another monoglyceride.

Starch granules used according to the invention are preferentially small, being below 20 µm in size. Advantageously the main part of starch granules is between 2 to 10 µm in size. Starch granules are in a way giving in the cheese a starch content from 1 to 5%, preferentially between 2.0 to 3.5%.

In addition to the effect on textural properties, added starch has also caused an increase in the extent of proteolytic and peptolytic breakdown. This is probably due to the said increase of minute cracks in the protein structure, which improves the contact of proteolytic and peptolytic enzymes present in the liquid phase with the compact protein structure. These enzymes derive in part from the rennet, in part from the bacteria of the starter culture multiplying in the liquid phase. As a logical extension of this observation, also other proteolytic enzymes could be brought in the cheese structure impregnated in the starch granules.

Starch to be used according to the invention can be, for example, from oat, rice, amaranth, wheat or barley. An advantageous starch is oat starch, which has been used in the experiments of the Examples given below. The starch used is native, but it also can be treated enzymatically or subjected to chemical treatment in such a way that the granule structure is preserved. It also can be used as a carrier of enzymes for enhancing the ripening of cheese, or flavour or aroma substances, or coated or partially coated by a lipid substance, to give or modify additionally structural or sensory characteristics of the cheese.

The invention also includes a hard or semi-hard cheese, which is characterized by that it contains starch granules which are essentially evenly distributed, and the size of which is below 20 µm. Advantageously the cheese is of low-fat type, the fat content being between 10 to 25% of dry matter.

Objects of the invention are further the use of small-sized starch granules for replacing fat in low-fat, hard or semi-hard cheeses, and the use of starch granules to avoid the occurrence of a rubbery texture and/or to reduce the chewiness of a cheese, or as a carrier of enzymes enhancing ripening or of other cheese flavour modifying substances.

Application of the invention is illustrated by the following Examples.

### Example 1

0.5 kg of oat starch classified to contain predominantly fine granules, having a moisture content in equilibrium with ambient air, corresponding to 444 g of pure dry starch, was preswelled by mixing it in 5 litres of tap water of 60°C, and allowing the mixture to cool to room temperature. The mixture was added to 150 litres of pasteurized milk which had been adjusted to a fat content of 1.035% by removing fat by centrifugal separation. The mixture was subjected to a conventional preparation of low-fat (below 20% fat in dry substance) Edam type cheese, using a mixed strain lactic streptococci culture as a starter culture. Curdling time until starting of cutting was 95 minutes, and until starting of removing whey 117 minutes. pH of the whey removed from the cheese vat was 6.36, and after the pressing 4.99. Cheese yield was 15.14 kg corresponding to 9.91 litres of milk per kg cheese obtained. The content of starch in the cheese was 2.3%, corresponding to 78.4% of the starch added into cheese vat milk. After curing of six weeks, cylindrical samples with a height of 20 mm and 14 mm in diameter were subjected to measurement of texture profile using a crosshead speed of 250 mm/min and a distance of 15 mm, repeated twice. Results of the texture measurements are presented in Table 1. Results of chemical analyses of cheeses cured for 6 weeks are presented in Table 2.

According to experimental results and observations the preswelled native starch has retarded the curdling, and also caused a soft curdle, resulting to ample formation of so-called cheese dust, which was removed in the whey separated. The preswelled starch has also resulted an increase in the water-holding, which is reflected in the increase of yield. All figures of the textural parameters are lower than in nearly all of the other samples indicating the softness of the texture. In the sensory evaluation this was not judged as a fault, but as atypical for an Edam type cheese. The soft texture did not cause any disturbing stickiness. After ripening, transparent stripes were observable in the cutted surface indicating that cheese grains had been adhered to each other at the pressing stage less firmly than in the other experimental lots. This might lead along with the ripening to increased crumbliness, which is a desired property in some cheese types. Also the accentuated acid taste was atypical for Edam type cheeses, but its acceptability depended on the personal preferences of the panel members.

### Example 2

0.5 kg of oat starch classified to contain predominantly fine granules, having a moisture content in equilibrium with ambient air, corresponding to 444 g of pure dry starch, was preswelled by mixing it in 5 litres of tap water of 60°C. For complexing amylose, 16 g of glyceryl monostearate which previously was hydrated by adding it in water which then was heated to 60°C, was added to the mixture. The mixture was allowed to cool to room temperature during 45 minutes. It was then added to 150 litres of pasteurized milk which had been adjusted to a fat content of 1.0 %, and preparation of cheese was performed as in Example 1. Curdling time until starting of cutting was 85 min, until starting removal of whey 105 min. pH of whey removed from the vat was 6.32, and after the pressing 5.0. Cheese yield was 14.63 kg corresponding to 10.25 litres of milk per kg cheese. The content of starch in the cheese was 2.6%, corresponding to 85.7% of the amount added to the cheese vat. Results of the texture measurements made after 6 weeks of ripening are presented in Table 1, results of chemical analyses in Table 2.

According to the results, complexing of amylose has improved curdling ability as compared to Example 1, but not to the level of control cheeses. It also has reduced water binding, which has led to a lower cheese yield and to higher values in texture measurements than in Example 1. Figures of textural properties are however at a lower level than in control samples without addition of starch.

### Example 3

0.5 kg of oat starch classified to contain predominantly fine granules, having a moisture content in equilibrium with ambient air, corresponding to 444 g of pure dry starch, was mixed without preswelling with 150 litres of pasteurized milk, which had been standardized to a fat content of 1.01%. Preparation of cheese was performed as in Example 1. Curdling time until starting the cutting was 30 min. pH of whey removed from the vat was 6.31, and after pressing 5.10. Cheese yield was 14.23% corresponding to 10.54 litres per kg cheese. The content of starch in the cheese was 3.3%. Considering the analyzing accuracy, this corresponds more than 100% of the amount of starch added to the cheese vat. Results of textural measurements after 6 weeks of ripening are presented in Table 1, of chemical analyses in Table 2.

According to the results, starch added in non-preswelled state in the cheese vat did not retard the curdling as did the preswelled starches. It was enclosed in the curdle completely. Elasticity and chewiness values are clearly higher than in the Examples 1 and 2. It probably is in part caused by the non-complexed amylose on the surface of the granules, in part by the higher dry matter content, both effecting a reinforcing of the structure. A special feature is an elevation of the relative level of soluble nitrogen. This is probably due to the more loose structure created by swelling of the starch granules, improving contact of proteolytic and peptolytic enzymes with protein particles.

### Example 4

0.5 kg of oat starch classified to contain predominantly fine granules, having a moisture content in equilibrium with ambient air, corresponding to 444 g of pure dry starch, was mixed without a previous swelling in 5 litres of cold tap water. Into this mixture was added 16 g of glyceryl monostearate which had been hydrated by mixing it with 100 mL of distilled water, heating this mixture to 60°C and allowing to stand at room temperature overnight. The mixture of starch and monoglyceride was allowed to stand at room temperature for 30 minutes, after which it was added into 150 litres of pasteurized cheese vat milk, standardized to a fat content of 1.01%. Preparation of cheese was performed as in Example 1. Curdling time until starting of cutting was 35 minutes. pH of whey removed from the cheese vat was 6.30, and after pressing 5.13. Cheese yield was 14.23 kg corresponding to 10.32 litres milk per kg of cheese. The content of starch in the cheese was 3.0% corresponding 98% of the amount added in the cheese vat. Results of textural measurements made after 6 weeks of ripening are presented in Table 1, results of chemical analyses in Table 2.

According to the results, textural values are clearly lower than in Example 3. It probably is in part caused by the fact that amylose on the surface of granules was in a complexed state and thus did not cause a similar reinforcing of the structure as in Example 3, in part possibly also affected by the lower dry matter content as compared to Example 3. A similar increase of the relative content of soluble nitrogen as in Example 3 is observed.

### Example 5

As comparative tests to Examples 1 to 4, low-fat Edam type cheese (20% fat in the dry substance) was prepared in four pilot scale batches without addition of starch. Fat content of the milk in cheese vat was 1.0%. From two batches, the following results were recorded:

| | Vat 1 | Vat 2 |
|---|---|---|
| Curdling time, min | 50 | 50 |
| pH of whey removed from vat | 6.29 | 6.28 |
| pH after pressing | 5.09 | 5.14 |
| Cheese yield, kg/150 L milk | 13.88 | 13.81 |
| Milk consumption, L/kg cheese | 10.81 | 10.86 |

Results of textural measurements made after 6 weeks of ripening are presented in Table 1, results of chemical analyses in Table 2.

According to the results, in the two batches the acidification occurred at nearly the same rate as in Examples 1 to 4, and thus faster than in the industrial scale tests of Example 6. This has also caused a sensorially noticeable accentution of the acidity. The values of the textural measurements are lower than in the industrial scale tests, but higher than in the Examples 1 to 4. The texture of all of these four control batches made in pilot scale deviates from the cheeses of Examples 1 to 4 most remarkably in the chewiness values. The relative content of soluble nitrogen is at the same level as in Examples 1 and 2.

### Example 6

As comparative tests to Examples 1 to 5, one batch of low-fat (20% fat in the dry substance) and one batch of full-fat (40 % fat in the dry substance) Edam type cheese, without any additions of starch, were prepared in industrial scale. After 6 weeks of curing, similar textural measurements and chemical analyses as for the previous Examples were performed. Results are presented in Tables 1 and 2. According to the results, the low-fat batch showed very high values for gumminess and chewiness. In this batch, also flavour and analogically the content of soluble nitrogen developed slowly during curing. The textural values presented for the 40% fat containing cheeses are not fully commensurable due to the fat content giving a different character of the material, and to the method of measurement. In the sensory evaluation, the 40% fat cheese was not rated as being rubbery in texture.

**Table 1. Textural properties after 6 weeks of curing.**

| | Hardness, | Cohesivity | Elasticity | Gumminess | Chewiness |
|---|---|---|---|---|---|
| | N | | | | |
| Example 1 | 45.85 | 0.290 | 39.73 | 13.31 | 528.6 |
| Example 2 | 53.75 | 0.361 | 43.16 | 19.42 | 838.1 |
| Example 3 | 42.08 | 0.404 | 54.41 | 17.03 | 926.4 |
| Example 4 | 33.42 | 0.380 | 50.79 | 12.72 | 645.8 |
| Example 5,batch 1 | 50.51 | 0.406 | 53.84 | 20.54 | 1106.0 |
| Example 5, batch 2 | 57.79 | 0.437 | 56.89 | 25.31 | 1440.0 |
| Example 5, batch 3 | 39.48 | 0.410 | 54.6 | 16.20 | 884.8 |
| Example 5, batch 4 | 33.61 | 0.497 | 67.77 | 16.73 | 1134.0 |
| Example 6, 20% | 132.4 | 0.767 | 74.25 | 101.5 | 7540.0 |
| Example 6, 40% | 97.08 | 0.607 | 67.38 | 58.96 | 3973.0 |

| | | | | | |
|---|---|---|---|---|---|
| Hardness = the maximal force withstanding compression in the first compressing cycle Cohesiveness = surface of the distance/force curve at the second compression cycle divided by the surface at the first cycle Elasticity = Height of the sample after the first compression cycle, % of the original height of the sample Gumminess = Hardness x cohesiveness Chewiness = Hardness x cohesiveness x elasticity | | | | | |

**Table 2. Chemical composition of cheeses of Examples 1 to 6**

| | Dry | Protein, | Fat, % | Fat in dry | NaCl,% | Soluble |
|---|---|---|---|---|---|---|
| | matter,% | % N x 6.38 | | substance, % | | N/ % total N |
| Example 1 | 43.6 | 26.5 | 8.0 | 18.3 | 1.74 | 16.2 |
| Example 2 | 45.9 | 27.6 | 8.5 | 18.5 | 1.47 | 15.6 |
| Example 3 | 48.0 | 28.4 | 9.5 | 19.8 | 1.61 | 19.7 |
| Example 4 | 46.0 | 27.0 | 9.3 | 20.1 | 1.66 | 20.1 |
| Example 5,batch 1 | 47.2 | 28.8 | 10.5 | 22.2 | 1.93 | 15.5 |
| Example 5, batch 2 | 49.8 | 30.2 | 11.5 | 23.1 | 1.82 | 15.4 |
| Example 6, 20% | 52.6 | 32.6 | 13.5 | 25.6 | 1.16 | 12.3 |
| Example 6, 40% | 57.4 | 27.1 | 24.3 | 42.3 | 1.08 | 12.5 |

### Example 7

Oat starch was partially coated with butter oil. 50 g butter oil was dissolved in 950 g of absolute ethanol. This solution was kept at 75°C, 500 g of oat starch was mixed, and mixing continued for 10 minutes. Starch was separated by rapid filtering and dried at 30°C under vacuum overnight. Oil absorbed was 1.8% of the weight of the starch. In microscopic examination oil was found to be attached as tiny (0.2 to 4 µm in diameter) droplets on the surface of starch granules, a part being on the grooves of the granule surfaces, another part loosely attached on even surfaces.

Low-fat Edam type cheese was prepared by mixing 0.5 kg of the butter-oil coated starch into 150 litres of pasteurized milk immediately before addition of rennet, and cheese was otherwise prepared as in Example 1. A control batch without addition of starch was simultaneously prepared from the same batch of milk. Curdling time was in both cases 30 minutes. Cheese yield for the test batch was 14.4 kg, for the control batch 14.1 kg.

After 6 weeks of curing, analytical values of the test and control cheeses were similar except of ratio of soluble nitrogen to total nitrogen, which for the test batch was 19.77%, and for the control batch 15.37%. In sensory evaluation, the test batch had plenty of small holes and atypical holes, and was also rated soft. It had a stronger overall taste than the control, being more balanced than that of control, and also left a fatty after-taste in the mouth. In microscopic examination the protein matrix of the control cheese was found to be compact, containing unevenly distributed cracks. Fat was also evenly distributed in tiny droplets. In the test cheese evenly distributed thin and short cracks were found. A great part of the fat was concentrated around the starch granules. Fat in these accumulations melted easily when illuminated with laser light beam, whereas in the control cheese sample under similar illumination fat globules remained embedded in the protein matrix. Individual starch granules had stainable fat droplets still left on their surfaces and in the grooves.

### Example 8

Low-fat cream cheese of type Turunmaa was prepared from pasteurized milk of 1.0% fat content with an addition of 0.5 kg oat starch, butter-oil coated oat starch, or glyceryl monostearate treated oat starch per 150 litres of cheese vat milk. Control cheeses were prepared with no addition of starch. After 6 weeks of curing, soluble nitrogen of the control cheese was 13.8% of the total nitrogen, whereas in the batches with the said added starches the soluble nitrogen was 17.2; 19.2; and 20.0% of total nitrogen, respectively. In sensory evaluation, the control cheese was rated hard and very mild in aroma, whereas the cheeses with added starches were softer and had a more intensive aroma. Highest ratings were given to the cheese with added butter-oil coated starch. The aroma was more balanced than in the other cheeses, and no bitterness was observed. In microscopic comparison of this cheese to the control, a similar overall difference as described in Example 7 was found, however, the cracks were in the control cheese more remarkable than in the control of Example 7.

### Example 9

Low-fat cream cheeses of type Oltermanni were prepared from pasteurized milk adjusted to 1.0% fat content, with or without addition of 0.5 kg oat starch per 150 litres of milk. After curing of 6 weeks, soluble nitrogen of the control cheese was 16.7% of total nitrogen, and of the test with added starch 18.5%. Other analytical figures were similar. In sensory evaluation the cheese with added oat starch was rated softer, but not sticky. It had a more intense, slightly acidic, but balanced flavour.

### Example 10

Low-fat Cheddar-type cheeses were prepared from pasteurized milk with 1.0% fat content, with or without addition of 0.5 kg oat starch in dry state per 150 litres of milk. After curing of three months, the control cheese was rated dry and crumbly, whereas the cheese with added oat starch had a softer consistency and got a higher flavour note. However at this stage it was not yet sufficiently ripened to be marketed.

The amounts of starch and fat contents given in the Examples have been selected to demonstrate the functioning of the method, and they demonstrate the influencing factors of the invention. In different types of cheeses, fat content, amounts of starch and its pretreatment can be selected depending on the desired taste and structural properties.

Starch used in the Examples has been oat starch with a granule size below 20 µm and for its main part from 2 to 10 µm. Also other small-granuled starch sources such as rice or amaranth starch, or size-classified wheat or barley starch, can be used for the purpose. For complexing amylose, polar lipids to be used can, for example, be monoglycerides as such or modified chemically or enzymatically, diglycerides, phospholipids, glycolipids, or their combinations. For coating starch granules with lipids, unit operations known as such, for example contacting starch granules with aerosol of fat, oil or lipid soluble aroma or flavour solution, can be used.

## Claims

1. A method for the preparation of low-fat cheese with a content of starch, comprising the steps of
- removal of fat from milk
- addition of fine-granuled starch to the milk
- curdling the milk to produce curdle with the starch granules distributed therein,
- cutting the curdle into grains,
- removal of whey separated from the grains,
- compressing the grains to cheese, and
- ripening the cheese
**characterized by** the use of native starch, or starch treated enzymatically or subjected to chemical treatment in such a way that the granule structure is preserved, the starch being added in an amount to yield cheese with a starch content from 1 to 5 %, and the starch granules producing an increase of cracks in the protein structure of the cheese.

2. A method according to Claim 1, **characterized in that** starch granules having a size below 20 µm are added to the milk.

3. A method according to Claim 2, **characterized in that** a major part of the starch granules added to the milk have a size from 2 to 10 µm.

4. A method according to any one of the preceding claims, **characterized in that** starch granules are added in a way to obtain a starch content from 2.0 to 3.5%.

5. A method according to any one of the preceding claims, **characterized in that** the starch is oat, rice, amaranth, wheat or barley starch.

6. A method according to any one of the preceding claims, **characterized in that** amylose present in the starch granules and/or amylose transferred from the granules to the liquid phase is complexed by one or several polar lipids.

7. A method according to Claim 6, **characterized in that** the polar lipid is a monoglyceride.

8. A method according to Claim 7, **characterized in that** the polar lipid is glyceryl monostearate.

9. A method according to any one of the preceding claims, **characterized in that** cheese with a fat content of 10 to 25% from dry matter is prepared.

10. A method according to any one of the preceding claims, **characterized in that** hard or semi-hard cheese is prepared.

11. Low-fat hard or semi-hard cheese obtainable by a method according to any one of the preceding Claims, **characterized in that** it contains from 1 to 5 % of starch granules which are evenly distributed and have a size below 20 µm, and there being cracks in the protein structure of the cheese caused by the starch granules.

12. Cheese according to Claim 11, **characterized in that** a major part of the starch granules has a size from 2 to 10 µm.

13. Cheese according to Claim 11 or 12, **characterized in that** its starch content is from 2.0 to 3.5%.

14. Cheese according to any one of the Claims 11 to 13, **characterized in that** its fat content is between 10 to 25% of dry matter.

15. Use of fine-granuled starch in a content from 1 to 5 % in low-fat, hard or semi-hard cheese to replace fat globules in the cheese and by an increase of minute cracks, to dilute coherence of the protein network thereof, wherein the starch is a native starch or starch treated enzymatically or subjected to chemical treatment in such a way that the granule structure is preserved.

16. Use according to Claim 15, **characterized in that** fine-granuled starch is used in preparation of low-fat, hard or semi-hard cheese to prevent occurrence of rubbery texture and/or to diminish chewiness.

17. Use according to Claim 15, **characterized in that** small-sized starch granules which have previously been coated or partially coated with a lipid are used, for preparing low-fat cheese, to improve its flavour or mouthfeel or to give a fatty after-taste.

18. Use according to Claim 15, **characterized in that** small-sized starch granules which have been previously impregnated with a flavour compound or an enzyme are used, to improve or modify the flavour and/or to enhance the ripening of cheese.

## Patentansprüche

1. Verfahren zur Herstellung von fettarmem Käse mit einem Gehalt an Stärke, umfassend die folgenden Schritte: Entfernen von Fett aus der Milch; Zusetzen von fein granulierter Stärke zur Milch; Gerinnen der Milch zur Erzeugung von Sauermilch, in der die Stärkegranulate verteilt sind; Schneiden der Sauermilch in feine Teilchen; Entfernen der Molke, die von den feinen Teilchen getrennt ist; Verpressen der feinen Teilchen zu Käse; und Reifenlassen des Käses, **gekennzeichnet durch** die Verwendung von natürlicher Stärke oder enzymatisch behandelter Stärke oder einer chemischen Behandlung unterworfener Stärke, so daß die Granulatstruktur bewahrt wird, wobei die Stärke in einer Menge zugesetzt wird, die zu Käse mit einem Stärkegehalt von 1 bis 5 % führt, und das Stärkegranulat einen Anstieg der Brüche in der Proteinstruktur des Käses erzeugt.

2. Verfahren nach Anspruch 1, **dadurch gekennzeichnet, daß** Stärkegranulate mit einer Größe von weniger als 20 µm der Milch zugesetzt werden.

3. Verfahren nach Anspruch 2, **dadurch gekennzeichnet, daß** ein Hauptteil der Stärkegranulate, die der Milch zugesetzt werden, eine Größe von 2 bis 10 µm aufweisen.

4. Verfahren nach einem der vorhergehenden Ansprüche, **dadurch gekennzeichnet, daß** die Stärkegranulate in einer Weise zugesetzt werden, daß ein Stärkegehalt von 2,0 bis 3,0 % erhalten wird.

5. Verfahren nach einem der vorhergehenden Ansprüche, **dadurch gekennzeichnet, daß** die Stärke Hafer-, Reis-, Amarant-, Weizen- oder Gerstenstärke ist.

6. Verfahren nach einem der vorhergehenden Ansprüche, **dadurch gekennzeichnet, daß** in dem Stärkegranulat Amylose vorhanden ist und / oder daß Amylose, die von dem Granulat in die Flüssigphase übertragen wird, durch ein oder mehrere polare Lipoide zusammengesetzt ist.

7. Verfahren nach Anspruch 6, **dadurch gekennzeichnet, daß** das polare Lipoid ein Monoglycerid ist.

8. Verfahren nach Anspruch 7, **dadurch gekennzeichnet, daß** das polare Lipoid ein Glycerinmonostearat ist.

9. Verfahren nach einem der vorhergehenden Ansprüche, **dadurch gekennzeichnet, daß** aus einer Trockenmasse Käse mit einem Fettgehalt von 10 bis 25 % hergestellt wird.

10. Verfahren nach einem der vorhergehenden Ansprüche, **dadurch gekennzeichnet, daß** Hartkäse oder Halbhartkäse hergestellt wird.

11. Fettarmer Hart- oder Halbhartkäse, hergestellt durch ein Verfahren gemäß einem der vorhergehenden Ansprüche, **dadurch gekennzeichnet, daß** der Käse 1 bis 5 % Stärkegranulat enthält, das gleichmäßig verteilt ist und eine Größe von weniger als 20 µm aufweist, und daß in der Proteinstruktur des Käses Brüche vorhanden sind, die durch die Stärkekörner verursacht werden.

12. Käse nach Anspruch 11, **dadurch gekennzeichnet, daß** der Hauptteil der Stärkekörner eine Größe von 2 bis 10 µm aufweist.

13. Käse nach Anspruch 11 oder 12, **dadurch gekennzeichnet, daß** sein Stärkegehalt zwischen 2,0 bis 3,5 % beträgt.

14. Käse nach einem der Ansprüche 11 bis 13, **dadurch gekennzeichnet, daß** sein Fettgehalt zwischen 10 bis 25 % Trockenmasse beträgt.

15. Verwendung einer fein granulierten Stärke in einem Gehalt von 1 bis 5 % in einem fettarmen Hartkäse oder Weichkäse zum Ersatz von Fettkügelchen in dem Käse und zur Erhöhung von feinen Brüchen oder Rissen zur Verdünnung der Kohäsion seines Proteinnetzes, wobei die Stärke natürliche Stärke oder enzymatisch behandelte Stärke oder einer chemischen Behandlung unterworfene Stärke ist, so daß die Granulatstruktur erhalten bleibt.

16. Verwendung nach Anspruch 15, **dadurch gekennzeichnet, daß** die feinkörnige Stärke bei der Herstellung von fettarmern, hartem oder halbhartem Käse verwendet wird, um das Auftreten von gummiartiger Textur und / oder verringerter Zähigkeit zu verhindern.

17. Verwendung nach Anspruch 15, **dadurch gekennzeichnet, daß** klein bemessene Stärkekörner, die vorher mit einem Lipoid beschichtet oder teilweise beschichtet worden sind, zur Herstellung von fettarmem Käse verwendet werden, um dessen Geruch oder Gusto zu verbessern oder ihm einen fettigen Nachgeschmack zu geben.

18. Verwendung nach Anspruch 15, **dadurch gekennzeichnet, daß** klein bemessene Stärketeilchen, die vorher mit einer Geruchsverbindung oder einem Enzym imprägniert worden sind, benutzt werden, um den Geruch zu verbessern und / oder das Reifen des Käses zu verstärken.

## Revendications

1. Procédé de préparation d'un fromage allégé en matières grasses contenant de l'amidon, comprenant les étapes consistant à :
- retirer la matière grasse du lait
- ajouter de l'amidon à granulation fine au lait
- cailler le lait pour produire un caillé avec les grains d'amidon distribués dedans,
- couper le caillé en grains,
- retirer le lactosérum séparé des grains,
- presser les grains jusqu'à l'obtention d'un fromage, et
- affiner le fromage
**caractérisé par** l'utilisation d'amidon natif, ou d'amidon traité de manière enzymatique ou soumis à un traitement chimique de telle sorte que la structure de granule est préservée, l'amidon étant ajouté en une quantité pour donner un fromage avec une teneur en amidon de 1 à 5 %, et les granules d'amidon produisant une augmentation de fissures dans la structure de protéine du fromage.

2. Procédé selon la revendication 1, **caractérisé en ce que** des granules d'amidon ayant une taille inférieure à 20 µm sont ajoutés au lait.

3. Procédé selon la revendication 2, **caractérisé en ce qu'**une majeure partie des granules d'amidon ajoutés au lait ont une taille de 2 à 10 µm.

4. Procédé selon l'une quelconque des revendications précédentes, **caractérisé en ce que** les granules d'amidon sont ajoutés de façon à obtenir une teneur en amidon de 2,0 à 3,5 %.

5. Procédé selon l'une quelconque des revendications précédentes, **caractérisé en ce que** l'amidon est un amidon d'avoine, de riz, d'amaranthe, de froment ou d'orge.

6. Procédé selon l'une quelconque des revendications précédentes, **caractérisé en ce que** l'amylose présent dans les granules d'amidon et/ou l'amylose transféré des granules à la phase liquide est complexé par un ou plusieurs lipides polaires.

7. Procédé selon la revendication 6, **caractérisé en ce que** le lipide polaire est un monoglycéride.

8. Procédé selon la revendication 7, **caractérisé en ce que** le lipide polaire est un monostéarate de glycéryle.

9. Procédé selon l'une quelconque des revendications précédentes, **caractérisé en ce qu'**un fromage ayant une teneur en matières grasses de 10 à 25 % à partir de la matière sèche est préparé.

10. Procédé selon l'une quelconque des revendications précédentes, **caractérisé en ce qu'**un fromage à pâte dure ou demi-dure est préparé.

11. Fromage à pâte dure ou demi-dure allégé en matières grasses pouvant être obtenu par un procédé selon l'une quelconque des revendications précédentes, **caractérisé en ce qu'**il contient de 1 à 5 % de granules d'amidon qui sont régulièrement distribués et ont une taille inférieure à 20 µm, et **en ce qu'**il existe des fissures dans la structure de protéine du fromage provoquées par les granules d'amidon.

12. Fromage selon la revendication 11, **caractérisé en ce qu'**une majeure partie des granules d'amidon a une taille de 2 à 10 µm.

13. Fromage selon la revendication 11 ou 12, **caractérisé en ce que** sa teneur en amidon est de 2,0 à 3,5 %.

14. Fromage selon l'une quelconque des revendications 11 à 13, **caractérisé en ce que** sa teneur en matières grasses est comprise entre 10 et 25 % de matière sèche.

15. Utilisation d'amidon à granulation fine en une teneur de 1 à 5 % dans un fromage à pâte dure ou demi-dure allégé en matières grasses pour remplacer les globules gras dans le fromage et par une augmentation de minuscules fissures, pour diluer la cohérence du réseau de protéines de celui-ci, dans laquelle l'amidon est un amidon natif ou un amidon traité de manière enzymatique ou soumis à un traitement chimique de telle sorte que la structure de granule est préservée.

16. Utilisation selon la revendication 15, **caractérisée en ce que** l'amidon à granulation fine est utilisé dans la préparation de fromage à pâte dure ou demi-dure allégé en matières grasses pour empêcher l'occurrence de texture caoutchouteuse et/ou pour diminuer la masticabilité.

17. Utilisation selon la revendication 15, **caractérisée en ce que** de petites granules d'amidon qui ont précédemment été revêtues ou partiellement revêtues d'un lipide sont utilisées, pour la préparation d'un fromage allégé en matières grasses, pour améliorer son arôme ou sa sensation en bouche ou pour donner un arrière-goût gras.

18. Utilisation selon la revendication 15, **caractérisée en ce que** de petits granules d'amidon qui ont été précédemment imprégnés d'un composé d'arôme ou d'une enzyme sont utilisés, pour améliorer ou modifier l'arôme et/ou pour améliorer l'affinage du fromage.
